# EUROPEAN PATENT APPLICATION

(11) **EP 4 084 466 A1**
(43) Date of publication of application: **02.11.2022**
(21) Application number: 22169081.1
(22) Date of filing: 06.04.2021
(51) Int. Cl.: H04N 5/232, H04N 7/18

(54) **CONFIGURING DEVICE SETTINGS**

(30) Priority: 03.04.2020 FI 20207057
(62) Divisional of application: 21167077.3
(71) Applicant: doop Osakeyhtiö, 20100 Turku (FI)
(72) Inventor: Lehtonen, Antero, 20210 Turku (FI)

(57) **Abstract**

The invention relates to a method and system for configuring settings of a device connected to a camera (1) as desired. The method comprises at least the following steps:
- a code (8) is generated from the desired settings and an image is generated comprising said code (8);
- the generated image is displayed to the camera (1);
- the desired settings for the device are identified from the code (8) using software of the camera (1);
- the software of the camera (1) is used to install the settings identified from the code (8) into device settings, whereupon the device changes its own operation according to the settings contained in the code (8).

## Description

### TECHNICAL FIELD OF THE INVENTION

The invention relates to a method and a system for configuring the settings of a device as desired, as set out in the preambles of the independent claims set out below. The invention relates, for example, to a new way of configuring the settings required for a surveillance camera.

### TECHNICAL BACKGROUND

Digital camera settings are processed, for example, when the camera is turned on, after a failure, or when a network connection used by the camera changes. Settings can sometimes be entered through a user interface connected to the camera. An application provided by the camera manufacturer that is connected to the camera software via a network connection is often used.

Using a camera often requires complex authentication, sending network keys, phone numbers, and various messages. Sometimes connections to even multiple servers are required to verify access rights and to access the camera interface.

It is not always possible to connect the camera to a network. For example, when installing a new camera, it often does not have network settings ready. For example, the desired wireless network may not be available just when the new settings should be entered. Sometimes the camera is in such a challenging location that it is not even possible to get a cable connection to it, let alone that its physical interface could be accessed.

There are often other devices connected to the camera, or the camera is connected to other devices that are difficult to set up.

There can be many settings to enter. Recording them is often laborious and error prone.

Cameras or other devices are in use less than would be possible because the desired settings have not been entered due to lack of time, will, or skills.

### OBJECT OF THE INVENTION

The object of the present invention is to reduce or even eliminate the above-mentioned problems occurring in the prior art.

It is an object of the present invention to provide a solution which makes entering settings on a device, such as a camera, easy, fast, reliable, affordable, safe and even fun.

It is an object of the present invention to provide a more efficient way of entering even large amounts of settings to a camera or other device.

It is an object of the present invention to enhance the installation and repair of the camera and to increase the operating time of the camera.

### SUMMARY OF THE INVENTION

Among other things, in order to achieve the above-mentioned objects, the method, system and other objects of the invention are characterized by what is set forth in the appended independent claims.

The embodiments and advantages mentioned in this text apply, where applicable, to the method, system, and other objects according to the invention, although it is not always mentioned separately.

One way of describing the method and system according to the invention is to say that in order to configure the settings of a particular device, an image is generated comprising a code comprising the desired device settings. The code is shown to the camera, whose software first extracts the desired settings from the code and then installs the settings on the device.

One way to describe the invention is to say that according to the invention
- a code is generated from desired settings and an image is generated comprising said code;
- the generated image is shown to the camera;
- the desired settings for the device are identified from the code using the camera software;
- the camera software is used to install the settings identified by the code into the device settings, whereupon the device changes its own operation according to the settings contained in the code.

One method according to the invention for configuring the desired settings of a device comprises at least the following steps:
- generating a code, for example, a QR code, from the desired device settings,
- generating an image comprising said code;
- arranging a camera in a code scanning mode in which it can shoot an image in which information intended for the camera is encoded, e.g., QR codes;
- displaying the generated image to the camera;
- recognizing, by means of camera software, that the camera is scanning a code with information intended for it;
- saving the code information and identifying from it with the camera software the desired settings of the device;
- installing the settings identified from the code into the device settings using the camera software, whereupon the device changes its own operation according to the settings contained in the code.

One system according to the invention for configuring the settings of a device as desired comprises a camera comprising an electronic memory and software arranged to be run therein, the software comprising program code elements by means of which
- the camera can be arranged in a code scanning mode in which the camera can shoot an image in which information intended for the camera is encoded;
- the camera can recognize that it is shooting a code with information intended for the camera;
- the code information can be saved, and the desired settings of the device can be identified from it;
- the settings identified from the code can be installed as device settings, to change the operation of the device according to the settings contained in the code.

To enter the settings, the camera is set manually or automatically to a code recognition mode, that is, a mode where the camera can shoot, recognize, and receive a code or codes. For example, the camera may be set to recognize a special key code from its image, even if the camera is not in recognition mode, after which it may set itself to code recognition mode, i.e., ready to receive new settings. The code recognition mode is not necessarily a special mode, but in an embodiment the camera is ready to receive codes even in normal operation mode. The camera software has the necessary information to interpret various codes. The generation and interpretation of various codes is known per se and will not be discussed in more detail here. The code can be any form of information that can be read by the camera, such as a barcode or two-dimensional pattern code, such as a QR code, handwritten or typed text, or other text, image, character or string, graphic object, coloured object, colour, expression, gesture, or another graphic element or other object recognized by the camera that includes camera settings.

Camera means any camera to which settings can be made digitally. The camera can be, for example, a video camera or a still camera. The camera may be, for example, a surveillance camera on the street or in commercial premises such as a store, a game camera, a customer flow camera, a production plant camera, an outward camera in a vehicle such as a traffic sign camera, a camera of a computer, a mobile phone, or other terminal device.

The camera comprises the camera part itself and a computer. The camera part may comprise, for example, optics and a photosensitive cell for converting the image to digital form. The computer and its software are used to save and process the image and possibly interpret and edit it. The camera part of the camera and the computer may be on the same physical device. They can be located on different devices. They can be located close to each other or far apart. The camera part and the computer can communicate with each other via a wireless or wired connection. There may be several computers, some computers may be attached to the camera, some separate. There can be several cameras connected to the same computer or to different computers. Several computers and/or camera(s) can be connected to each other, for example via a data network.

Certain parts of the invention are typically performed, at least in part, programmatically, for example by means of computers and communication devices between them. A computer typically comprises an electronic memory and program code for execution therein arranged to perform the necessary functions. Communication devices may comprise, for example, transmitters, receivers, wires, devices required by the data network, and program codes for their use. The components which may be required by the invention, such as computers, processors, memories, software, databases, display devices, sensors, radio transmitters and receivers, and the operation of the components, such as data transmission, are known per se and will not be described in more detail in this connection.

The device whose settings are set by means of the invention may be, for example, a camera used in the invention. The device may be a server connected to the camera, for example a server used to manage the camera system. The device may be another device connected to the camera, such as a printer, network video recorder (NVR), customer flow counter, information display or other display device, a medical device such as a ventilator or defibrillator, a robotic arm, or a conveyor control device. The device can be one that cannot be accessed or whose operation must be able to be changed quickly, such as various emergency stop actuators.

According to the invention, one or more of the following are taken as the desired settings:
- the location of the camera from the location information of the terminal device or selected by the user, for example from the map of the application of the terminal device;
- the camera's shooting direction from an image taken by the terminal device or from a compass or orientation sensor built into the terminal device.

In one embodiment, the code to be generated takes the desired settings of several devices. In other words, the code may comprise, for example, the settings of the camera and the server or other device connected to it, for example the network settings of a wireless network.

Possible embodiments of the invention include e.g. the following changes to settings made with the code shown to the camera:
- A printer connected to the camera can be set to transfer printouts from a specific client to that printer. The printer software can be instructed to modify the output to suit the user's preferences, for example, the desired stapling, punching, duplexing can be set.
- For example, user IDs, network settings, recording start time, and end time can be changed in the network video recorder (NVR) settings.
- A client flow counter can be controlled, for example, by setting its network settings, determining the directions to read from the client stream, and the properties of objects that can be identified from the client stream, such as minimum and maximum heights of people.
- The emergency stop function of the desired device can be activated. This causes the desired device to stop even if the normal stop or power switch cannot be accessed. That is, a particular device or apparatus can be stopped by showing a certain code to the camera, such as an image of a particular colour or pattern, such as a normally hidden card, or a gesture.
- An elevator can be programmed to travel to a particular floor without touching its normal buttons by showing a certain code to the camera, such as an image of a particular colour or pattern, or a hand gesture.
- The locations of the products or sets of products, for example in a store space or other customer space, on a table or shelf, can be indicated by the codes according to the invention. In this way, the location of each product can be automatically recorded in the memory of the store space monitoring system from the image produced by the camera describing the products and codes. In this way, the system can, for example, use pattern recognition to monitor the quantities of products on display in the store and notify staff of any reduction or depletion of products on display.

Thus, the invention, or part thereof, can be said to be configuring settings of a device, such as a camera by showing a code, such as a QR code, to a camera. The camera software identifies the settings from the code and installs them or participates in their installation, for example by sending the settings forward.

One advantage of the invention is that no network connection or other connection from or to the camera is necessarily required to set up the camera or other device.

One advantage of the invention is that the settings of the camera or other device can be easily set without a user interface, only by showing the code containing the settings to the camera.

In one embodiment of the invention, arrangement of the code scanning mode, scanning and identification of the code, saving the information, identification and installation of the settings are performed without communication or connection with the camera and the server or some other computer. For example, user authentication to the system server or other similar data flow is not required when operating without a network connection. This allows a person to set up a camera or other device in almost any situation, as long as the camera has power.

In one embodiment of the invention, the camera is connected to a server via a network connection. The server can control the operation of the camera at least in part. In this case, the code scanned by the camera according to the invention can be used to set the settings of the server connected via the network connection. For example, the settings that control camera operation. The camera software recognizes that the code it scans contains settings of the server and forwards these settings to the server over a network connection. In this case, the server installs the settings to itself and changes its operation and/or camera operation according to the new settings. This allows for easy remote programming of the server.

In one embodiment of the invention, said code comprises network settings of a wireless network. In one embodiment, the code comprises an SSID (Service Set Identifier), i.e., a domain name of a wireless local area network. In one embodiment, the code comprises a wireless network password. The code may also include other network settings. The code simplifies and eases entering settings.

In one embodiment of the invention, after installing the network settings of the wireless network, the camera connects to, for example, a server via the wireless network and the data network and starts its programmed function. The programmed function can be, for example, saving images or video to a web server, transmitting images to a neural network for analysis, or streaming video to a control room of a camera system, for example. Images or video captured by the camera can also be saved elsewhere, for example in a mass memory such as a memory card in the camera.

In one embodiment of the invention, the camera is arranged in a code scanning mode when the camera software recognizes that the camera or other device needs settings. For example, the camera can be set to code scanning mode when the camera is turned on for the first time or when the camera is disconnected from the network for a sufficient period of time. This way, the user entering the settings does not have to do anything about it, the camera is ready to receive the settings when it needs them.

In one embodiment of the invention, a code for the desired settings of the camera or other device is generated on paper, cardboard, fabric, or other printable or writable surface. The code can be generated, for example, by printing or handwriting or hand-drawing. In particular, small papers, cartons, or other small and thin materials are convenient to use. In this way, the user of the camera can carry several different codes with them or it is easy for them to carry the code in his pocket, for example. In one embodiment, the printable or writable surface is the surface of an electronic input device, such as a touch screen or an electronic paper such as a reader. In one embodiment, the code is written or drawn manually on a touch screen, for example a touch screen of a terminal device.

In one embodiment of the invention, a code is generated from the desired settings of a camera or other device on an electronic display device, such as a television, information display, terminal device display, electronic paper, e.g. a reader, electronic price display, e.g. an ESL tag. Such a display device is easy to show to the camera. Such a display device can display as many different codes as possible.

In one embodiment of the invention, the terminal device and its display device are used to generate the code and/or show it to the camera. The terminal device, such as a mobile device, may have a suitable application, or the terminal device may use a web page to which the desired settings of the camera or other device can be entered or in which they can be selected. The application or web page of the terminal device generates a code from the desired settings of the camera or other device. The generated code is displayed on the screen of the terminal device. Now the user can show the code to the camera on their terminal device. With the terminal device, generating and showing the code to the camera is very simple. The terminal device can be, for example, a mobile device such as a mobile phone or tablet computer, or a laptop computer. In one embodiment, the display device of the terminal device is another display device, for example an information display or a television, which is in the field of view of the camera and on the screen of which the code can be displayed. For example, commercial spaces, such as store spaces, often have display devices that can be used to set camera settings.

In one embodiment of the invention, the network settings of the wireless network, or at least some of the settings, or at least the SSID, or at least the SSID and the network password, are entered manually in the terminal device application. This eliminates the need to send network information such as a password or other rights anywhere over a potentially insecure network.

In one embodiment of the invention, the features provided by a terminal device, such as a mobile device, are utilized, which, or parts of which, can be included in the code to be generated and thus transferred and saved as settings to the camera. In one embodiment of the invention, at least some of the desired settings of the camera or other device are taken from the operating system or applications of the terminal device. The taking of the settings can be made automatically, or the user can choose which settings are included in the code according to the invention. In one embodiment of the invention, the camera is set to the location of the camera from the location information of the terminal device. In one embodiment of the invention, the user themselves selects the location of the camera, for example in a map in the terminal device application. In one embodiment, the camera is set to the camera's shooting direction from an image taken by the terminal device or from the terminal device's orientation information generated by a compass and/or orientation sensor built into the terminal device. In one embodiment of the invention, the terminal device application detects the orientation of the terminal device and infers from it the direction in which the camera is pointing. For example, the shooting direction of the camera can be set to the same as the shooting direction of the camera of the terminal device or the longitudinal direction of the terminal device. The shooting direction of the camera can also be set manually. A modern terminal device such as a mobile device has a wealth of useful information readily available that can be used to configure camera settings.

The map of the terminal device application can be any map, for example a terrain map or an indoor map, for example a floor plan of a building or space, a 3D model describing a specific space or area, a CAD image or another object that can be used to mark and view locations and directions.

In one embodiment of the invention, the desired setting is the orientation of the camera. By changing the orientation of the camera, one can control the direction in which the camera sees. The orientation of the camera can be changed, for example, relative to its mounting location, such as a wall mount. In one embodiment of the invention, the focal length of the camera lens is taken as the desired setting. By changing the focal length of the lens, the distance seen by the camera can be controlled. By changing the orientation of the camera and/or the focal length of the lens, the shooting area, i.e. the area seen by the camera, can be controlled. The shooting area can be displayed on the map of the terminal device application. In one embodiment of the invention, the orientation of the camera and/or the focal length of the lens, i.e. the shooting area, is controlled on the application map of the terminal device, for example by moving the shooting area or its edges on the touch screen with a finger or the like. In one embodiment of the invention, the shooting area is freely delimited on the map. In one embodiment of the invention, the shooting area is limited to a size smaller than would be allowed by the orientation and focal length of the camera. This allows the camera to be focused only on certain subjects, while enhancing, for example, automatic pattern recognition or other calculation from the image.

In one embodiment of the invention, the desired settings of the camera or other device are divided into two or more codes shown to the camera, for example in several QR codes or several handwritten tags to be shown to the camera or several graphic elements to be shown to the camera. This can be done, for example, if there is more information to be transmitted that can fit in one code. This means that less information is put in a code, making it easier to read, for example, in bad weather or over a longer distance.

In one embodiment of the invention, said two or more codes are shown to the camera separately and/or at certain time intervals. In one embodiment, a mobile phone application controls the display device so that said multiple codes are displayed on the display device automatically, at appropriate intervals. Automation makes code display easier and more efficient.

In one embodiment of the invention, the information contained in the code is divided into several codes when it is found that the camera software cannot interpret the desired settings from the code shown to the camera. Thus, the system may first try to enter all the settings with fewer codes, for example with only one compact code with a lot of information. And if the camera cannot read the code, for example after a certain number of attempts or within a certain amount of time, the system can divide the settings into multiple, easier-to-read codes. In one embodiment, the terminal device recognizes that the code has not been received because the camera has not been able to make the network connection work. In this case, the code may include network settings. When the network connection is working, the camera can notify the user of a successful reading of the code or codes in a message sent to the terminal device via its network connection. Dividing the settings into several codes makes it possible to enter even a large amount of data easily and without errors.

In one embodiment of the invention, information about the state of the camera is sent from the camera software via a data network to a terminal device application, which presents operating instructions according to the state of the camera to the user of the terminal device in the display device of the terminal device. For example, the instructions may prompt the user to move closer to the camera or illuminate the code brighter or enter the next code. This makes it even easier to enter the code.

In one embodiment of the invention, the terminal device application uses the terminal device's own camera to identify the location of the camera being programmed and provides instructions for positioning the terminal device in front of the camera in a suitable location for optimal presentation of the code to the camera. For example, the terminal device software may take into account the location of the camera in the image taken by the terminal device camera and calculate the optimal location of the code based on it. This makes it easier to show the code successfully.

In one embodiment of the invention, the code to be generated is encrypted with encryption which can be at least partially decrypted by the camera software. This prevents the camera settings from being easily changed by outsiders.

In one solution, the invention is implemented without taking the location of the camera or the shooting direction of the camera as the desired settings. The applications and options presented in this text and their advantages are well suited to these solutions as well.

### BRIEF DESCRIPTION OF THE FIGURES

The invention is described in more detail below with reference to the enclosed schematic drawing, in which
- Figure 1: shows the operation of a system according to the invention;
- Figure 2: shows a mobile device and a code according to the invention in its display device;
- Figure 3: shows the location and orientation of a mobile device on a map base;
- Figure 4: shows a method according to the invention as a flow chart;
- Figure 5: shows different graphic elements;
- Figure 6: shows a second code according to the invention;
- Figure 7: shows a third code according to the invention; and
- Figure 8: shows a fourth code according to the invention.

### DETAILED DESCRIPTION OF THE EXAMPLES OF THE FIGURES

For the sake of clarity, same reference numerals are used in different figures and embodiments for some of the corresponding parts.

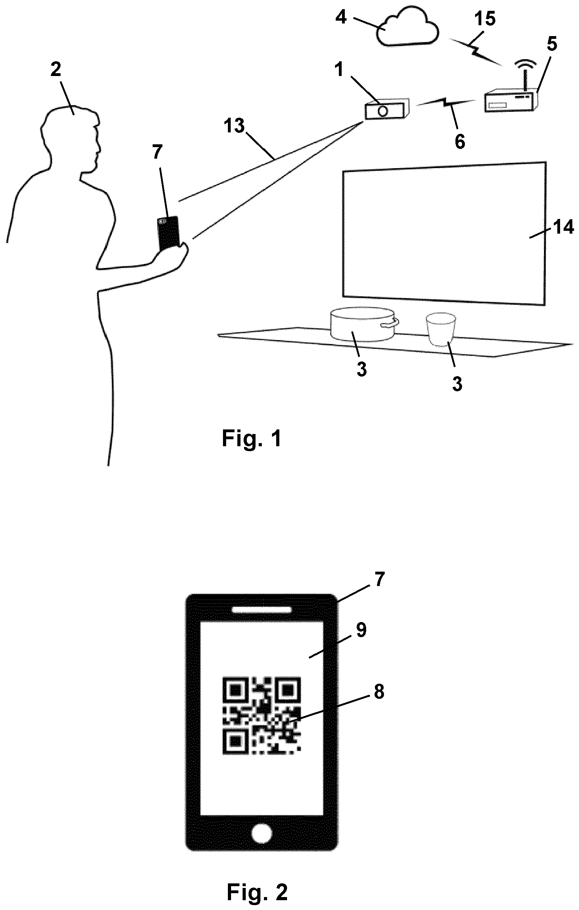

Figure 1 shows a camera 1 which has just been installed by a user 2 as a surveillance camera for a shop selling tableware 3. Camera 1 is plugged in and turned on for the first time. The store has a wireless router 5 connected to the Internet 4 via a network connection 15, but the camera 1 does not have data for the wireless network 6. Therefore, the camera 1 cannot access the network without installing them.

The figure does not show a possible server to which the camera 1 can be connected, for example via the Internet 4 or a cable such as a USB cable. Cameras such as surveillance camera 1 are typically controlled by a server behind a network connection. For example, the camera may send the captured data to a server, and some server settings may control the operation of the camera.

In order for the camera 1 to connect to the wireless network 6, and thereby to, for example, the server controlling it, the camera 1 usually needs at least a network SSID and a network password in its settings. The camera user 2 opens an application on his mobile device 7, into which application they enter the necessary wireless network information. The application encodes the settings into a QR code 8. The code 8 is displayed on a display 9 of the mobile device. The camera settings included in the code 8 may comprise the location and direction of the camera 1.

When camera 1 has started up, it has entered into a so-called code entry mode where it can scan, recognize and receive a code 8, or codes. The user 2 shows the code 8 to the camera 1 by placing their mobile device 7 in the field of view 13 of the camera 1 and pointing the display 9 of the mobile device towards the camera 1. The software of the camera 1 contains information for interpreting the code 8. In this way, the camera uses its software to identify its settings from code 8 and configure itself.

The store has a display device 14. If it is in the field of view 13 of a camera, it could be used to set the settings of the said camera. If the desired code 8 according to the invention is displayed on the display device 14, all cameras scanning it could be programmed at the same time.

Figure 2 shows a mobile device 7 and a QR code 8 according to the invention on its display 9.

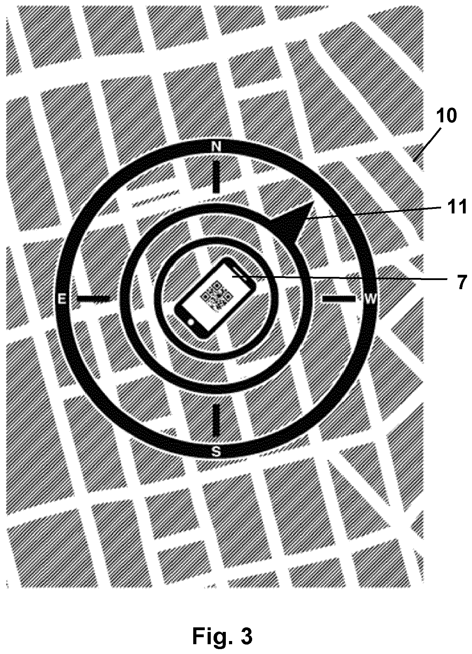

Figure 3 shows the location of a mobile device 7 on a map base 10 displayed in its application. The location can be taken automatically from the data of the mobile device, for example at the moment when the QR code is generated. The compass arrow 11 indicates the presumed shooting direction of the camera 1. The camera settings contained in the code 8 may comprise the location and orientation of the camera 1. If user 2 allows positioning in the mobile application, it is known where the mobile device 7 is. If the user 2 is with the camera 1 when using the application, it is also known where the camera 1 is physically located. It is also possible that the user 2 themselves selects the location of the camera 1 from the application map 10. It is possible that the application detects the attitude of the mobile device 7 and concludes from it the direction 11 in which the camera 1 points. In this case, if the user 2 turns their mobile device 7 to point in the shooting direction of the camera 1, it is known in which direction the camera 1 is directed. The application of the mobile device 7 can encode the location and direction of the camera 1 obtained in this way in the code to be shown to the camera 1. The location and/or direction can be taken from the data of the mobile device separately manually or, for example, automatically at the same moment as the user selects the code 8 to be generated.

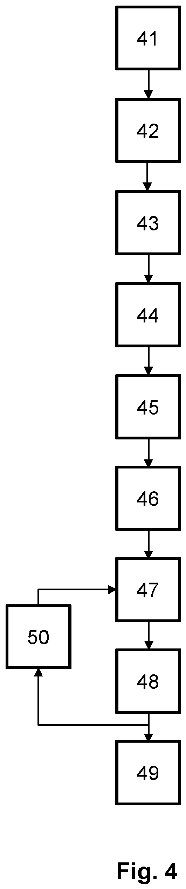

Figure 4 shows a flow chart of a method according to the invention, in which the user 2 of the invention aims to set the network settings of a wireless network 6 in his newly installed camera 1. In step 41 the user 2 opens an application intended for entering settings of the camera 1 in their terminal device, for example in their mobile device 7. In step 42 the user 2 enters in the application the required network settings, i.e. the SSID, i.e. the domain of the wireless local area network 6, and the password of the wireless network 6. In step 43, the user 2 moves to the vicinity of the camera 1 and allows their terminal device 7 to position them or retrieves their location, i.e. the location of the camera 1, from the map base displayed in the application. The application saves the location. In step 44, the user 2 holds the terminal device 7 horizontally in their hand. The application displays an arrow on the display 9 of the terminal device, which the user rotates to be parallel with the shooting direction of the camera 1. The application records the shooting direction of the camera 1. In step 45, the user 2 accepts and/or saves any further settings in the application. In step 46, the user 2 commands the application to generate one or more codes 8 according to the invention from the stored settings. In step 47, the application displays the code 8 on the display 9 of the terminal device 7 and the user 2 shows the generated code 8 to the camera 1. In step 48, it is examined whether the software of the camera 1 can understand the code. The software of the camera 1 reports successful reading of the code 8 to the software of the terminal device 7. If the code 8 was read successfully, in step 49, the software of camera 1 changes the camera settings according to what it read from the code. If the code was not understood in step 48 by the software of camera 1, a correction operation is performed in step 50, for example, code 8 may be divided into several more readable codes. Then, step 47 is retaken, where the application displays the divided or otherwise clarified code 8 on the screen 9 of the terminal device 7 and the user 2 shows the code 8 to the camera 1.

If the camera 1 has not established a network connection, it cannot send information about the successful reading of the code 8, in which case the software of the terminal device 7 can conclude that the settings have not been received. The correction function of step 50 may be, for example, as follows: The software of the terminal device 7 displays the code 8 until a notification is received from the camera 1 of a successful code reading, or until a certain timeout is reached. If this code reading timeout is reached, the software concludes that the code 8 reading failed and divides the code 8 into smaller parts or otherwise makes it easier to read. For example, it may be possible to set the display 9 of the terminal device brighter or the user 2 may be instructed, for example, on a better location of the terminal device 7. The software continues to try and make the code 8 easier to read until it receives a response from the camera 1 or until a certain timeout for the entire operation is reached, at which time the user 2 is informed that the code 8 cannot be entered now.

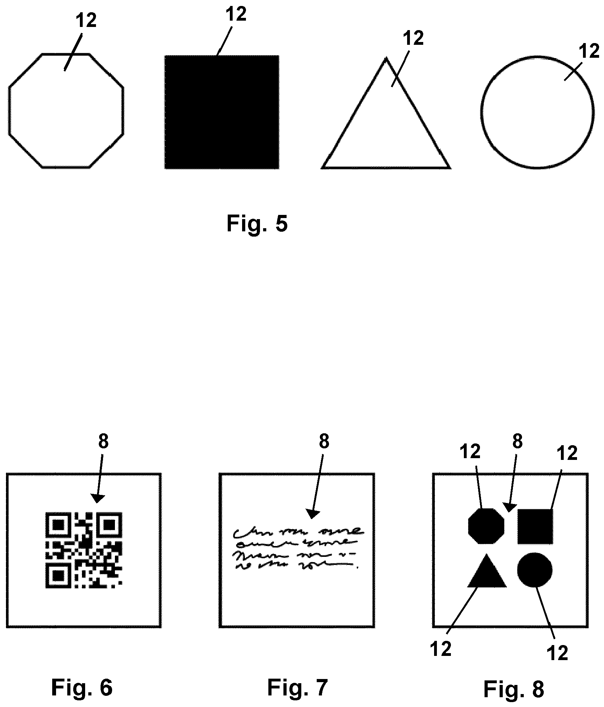

Figure 5 shows four exemplary graphic forms 12 that could be used as codes or parts of a code according to the invention. In the software of the camera 1 it has been defined what each shape 12 shown in the figure, for example, the white octagon, black square, white triangle and white circle, means. For example, one of the shapes 12 may mean that the function of the camera 1 at that time, such as recording, is stopped, another can be used for setting new parameters.

Figures 6, 7 and 8 show a few possible code types. In Figure 6, code 8 is a QR code, in Figure 7 a handwritten message, in Figure 8 a combination of four graphic shapes 12.

It is not intended to limit the invention to the examples described above, but the scope of the invention is determined by the independent claims presented below. The dependent claims present some advantageous embodiments of the invention.

## Claims

1. Method for configuring settings of a device as desired, which method comprises at least the following steps:
- generating a code (8) from the desired settings and generating an image comprising said code (8);
- arranging a camera (1) in a code scanning mode in which it can shoot an image in which information intended for the camera is encoded;
- showing the generated image to the camera (1);
- recognizing, by means of software of the camera (1), that the camera is scanning a code (8) with information intended for it;
- saving the information in the code (8) and identifying from it the desired settings of the device;
- installing the settings identified from the code (8) into the device settings using the software of the camera (1), whereupon the device changes its own operation according to the settings contained in the code (8),
**characterised in that** the device is a device (14) connected to the camera (1).

2. Method according to claim 1, **characterised in that** the device is a server connected to the camera (1).

3. Method according to any previous claim, **characterised in that** the device is one of the following: a server used to manage the camera system, a printer, network video recorder (NVR), customer flow counter, information display or other display device (14), a medical device such as a ventilator or defibrillator, a robotic arm, or a conveyor control device or an emergency stop actuator.

4. Method according to any previous claim, **characterised in that**
- the camera (1) is arranged in a code scanning mode, when the software of the camera (1) recognizes that the camera (1) or another device is in need of settings, for example when the camera (1) is turned on or when the network connection (15) of the camera is disconnected or the camera (1) is in another particular error mode.

5. Method according to any previous claim, **characterised in that**
- the desired settings of the device are divided into two or more codes (8) shown to the camera (1), whereby less information is put in a code.

6. Method according to claim 5, **characterised in that**
- said two or more codes (8) are shown to the camera (1) separately and/or at certain time intervals.

7. Method according to any previous claim 5 or 6, **characterised in that**
- it is first tried to enter all the settings with fewer codes, and if it is found that the software of the camera (1) cannot interpret the desired settings from the code (8) shown to the camera (1), for example after a certain number of attempts or within a certain amount of time, the information contained in the said code (8) is divided into several easier-to-read codes (8) and the said several codes (8) are shown to the camera (1).

8. Method according to any previous claim, **characterised in that**
- a code (8) is generated from the desired settings in an application of a terminal device (7);
- the generated image is shown to the camera (1) in the display device (9) of the terminal device (7).

9. Method according to any previous claim, **characterised in that**
- a code (8) is generated from the desired settings on a printable or writable surface by handwriting or hand-drawing or by printing.

10. Method according to any previous claim, **characterised in that** with the code shown to the camera, the following change is made to settings:
- A client flow counter is controlled, for example, by setting its network settings, determining the directions to read from the client stream, and the properties of objects that can be identified from the client stream, such as minimum and maximum heights of people.

11. Method according to any previous claim, **characterised in that** with the code shown to the camera, the following change is made to settings:
- The emergency stop function of the desired device is activated, i.e. the desired device is stopped by showing a certain code to the camera, such as an image of a particular colour or pattern, such as a normally hidden card, or a gesture.

12. Method according to any previous claim, **characterised in that** with the code shown to the camera, the following change is made to settings:
- An elevator is programmed to travel to a particular floor without touching its normal buttons by showing a certain code to the camera, such as an image of a particular colour or pattern, or a hand gesture.

13. Method according to any previous claim, **characterised in that** with the code shown to the camera, the following change is made to settings:
- Locations of products or sets of products, for example in a store space or other customer space, on a table or shelf, are indicated by the codes according to the invention, whereby, the location of each product is automatically recorded in a memory of a store space monitoring system from the image produced by the camera describing the products and codes, whereby, the system monitors, for example using pattern recognition, the quantities of products on display in the store and notifies staff of any reduction or depletion of products on display.

14. Method according to any previous claim, **characterised in that** with the code shown to the camera, one of the following changes is made to settings:
- A printer connected to the camera is set to transfer printouts from a specific client to that printer;
- Printer software of a printer connected to the camera is instructed to modify the output to suit the user's preferences, for example, the desired stapling, punching, duplexing is set;
- Network video recorder (NVR) settings are changed, for example, user IDs, network settings, recording start time, and end time are changed.

15. System for configuring the settings of a device as desired, which system comprises a camera (1) comprising an electronic memory and software arranged to be run therein, the software comprising program code elements enabling the camera (1) to be arranged in a code scanning mode, the program code elements being arranged to perform the following functions:
- the camera (1) shoots an image encoded with information for the camera;
- the camera (1) recognizes that it shoots a code (8) with information for the camera (1);
- the information of the code (8) is saved and the desired settings of the device can be identified from it;
- the settings identified from the code (8) are installed as device settings, to change the operation of the device according to the settings contained in code (8),
**characterized in that** the device is a device connected to the camera (1).
